# EUROPEAN PATENT SPECIFICATION

(11) **EP 2 379 992 B1**
(45) Date of publication and mention of the grant of the patent: **28.09.2016**
(21) Application number: 09834201.7
(22) Date of filing: 29.09.2009
(51) Int. Cl.: B05B 15/00, B65D 81/20, B05B 9/08, B65B 31/00

(54) **IMPROVED PUMP LID AND CONTAINERS EMPLOYING SUCH**
VERBESSERTER PUMPENDECKEL UND BEHÄLTER DAMIT
COUVERCLE AMÉLIORÉ POUR POMPE ET RÉCIPIENTS L'UTILISANT

(30) Priority: 23.12.2008 US 342092; 30.07.2009 US 512052
(43) Date of publication of application: 26.10.2011
(73) Proprietor: Captech Ltd., 30600 Or Akiva (IL)
(72) Inventor: HAIMI, Shlomo, 30600 Or Akiva (IL)
(74) Representative: Modiano, Micaela Nadia
(86) International application number: PCT/IB2009/054256
(87) International publication number: WO 2010/073132

(56) References cited:
- US-A- 4 610 665
- US-A- 4 610 665
- US-A- 4 932 094
- US-A- 4 932 094
- US-A1- 2005 074 342
- US-A1- 2005 115 632
- US-A1- 2005 115 632
- US-A1- 2005 274 734
- US-B1- 6 375 024

## Description

### FIELD AND BACKGROUND OF THE INVENTION

The present invention relates to pump lids for use with containers and, in particular, it concerns improvements to such lids,

Issued U.S. Patent No. 6,973,945 and pending U.S. Patent Application No. 2005/0274734. both to the present inventor, describe different embodiments of a container lid that include a pumping configuration such that rotational movement of one component or the pump lid is translated into linear movement of either the piston element or the cylinder element of the pump lid. The intention of such a pump lid is that ambient air may be pumped into the container, thereby creating a pressurized state within the container. Alternatively, air may be pumped out of the interior volume of the container, thereby creating of state of at least partial vacuum within the container.

The present invention comes to provide certain improvement to these lids which reduce the overall size of the pump lid and simplify manufacture and assembly of the pump lid.

There is therefore a need for an improved pump lid for use on a container.

### SUMMARY OF THE INVENTION

The present invention is an improved pump lid for use on a container.

According to the teachings of the present invention there is provided, a pump lid assembly for use with a container, the lid assembly comprising: (a) a rotatable pump cylinder configuration; and (b) a pump piston mechanically associated with said rotatable pump cylinder configuration such that at least a portion of said piston is deployed within said pump cylinder, thereby defining between them a variable pump volume, said pump piston configured with a substantially cylindrical piston wall having an interior surface and an exterior surface such that at least a portion of said interior surface is configured for releasable attachment to the container and at least a portion of said exterior surface interacts with said rotatable pump cylinder configuration; wherein said association is such that rotation of said rotatable pump cylinder configuration generates linear motion of said rotatable pump cylinder configuration.

According to a further teaching of the present invention, said exterior surface of said cylindrical piston wall includes at least one pin element extending laterally therefrom.

According to a further teaching of the present invention, said rotatable pump cylinder configuration includes a substantially cylindrical cylinder wall that defines a pump cylinder region in which said pump piston is deployed, said substantially cylindrical cylinder wall configured with a wave shaped groove into which said pin element extends.

According to a further teaching of the present invention, said rotatable pump cylinder configuration includes at least two components that when assembled define between them said wave shaped groove.

According to a further teaching of the present invention, said two components, when assembled, define between them said wave shaped groove and are configured such that a first component includes a top wall and a side wall of said wave shaped groove and a second component includes a bottom wall of said wave shaped groove.

According to a further teaching of the present invention, said exterior surface of said cylindrical piston wall includes a resilient lip that extends around a periphery of said cylindrical wall and provides an air-tight seal between said rotatable pump cylinder configuration and said pump piston element during an expansion stroke, and when under pressure of a compression stroke, allows air to pass between said rotatable pump cylinder configuration and said pump piston element.

There is also provided according to the teachings of the present invention, a container for the pressurized discharge of a fluid contained therein, the container comprising: (a) a container body; (b) a pump lid deployed on the container body for pressurizing an interior volume of the container, the pump lid having: (i) a rotatable pump cylinder configuration; and (ii) a pump piston mechanically associated with the rotatable pump cylinder configuration such that at least a portion of the piston is deployed within the pump cylinder, thereby defining between them a variable pump volume, the pump piston configured with a substantially cylindrical piston wall having an interior surface and an exterior surface such that at least a portion of the interior surface is configured for releasable attachment to the container and at least a portion of the exterior surface interacts with the rotatable pump cylinder configuration; wherein the association is such that rotation of the rotatable pump cylinder configuration generates linear motion of the rotatable pump cylinder configuration; (c) a release control arrangement; and (d) an outlet nozzle.

According to a further teaching of the present invention, there is also provided a barrier deployed within the interior volume of the container so as to separate pressurized air from the fluid contained in the container.

There is also provided according to the teachings of the present invention, a method for discharging pressurized fluid from a container, the method comprising: (a) providing a container body; (b) providing a pump lid deployed on the container body for pressurizing an interior volume of the container, the pump lid having: (i) a rotatable pump cylinder configuration; and (ii) a pump piston mechanically associated with the rotatable pump cylinder configuration such that at least a portion of the piston is deployed within the pump cylinder, thereby defining between them a variable pump volume, the pump piston configured with a substantially cylindrical piston wall having an interior surface and an exterior surface such that at least a portion of the interior surface is configured for releasable attachment to the container and at least a portion of the exterior surface interacts with the rotatable pump cylinder configuration; wherein the association is such that rotation of the rotatable pump cylinder configuration generates linear motion of the rotatable pump cylinder configuration; (c) actuating the pump lid so as to pressurize an interior volume of the container; and (d) activating a release control arrangement so as to discharge the fluid through an outlet nozzle.

There is also provided according to the teachings of the present invention, a pump lid assembly for use with a container, the lid assembly comprising: (a) a rotatable pump cylinder configuration; (b) a pump piston mechanically associated with the rotatable pump cylinder configuration such that at least a portion of the piston is deployed within the pump cylinder, thereby defining between them a variable pump volume, the pump piston configured with a substantially cylindrical piston wall having an interior surface and an exterior surface such that at least a portion of the interior surface is configured for releasable attachment to the container and at least a portion of the exterior surface interacts with the rotatable pump cylinder configuration; wherein the association is such that rotation of the rotatable pump cylinder configuration generates linear motion of the rotatable pump cylinder configuration; and (c) a one-way valve arrangement comprising at least one valve component having a through slit through which air is forced by the linear motion.

According to a further teaching of the present invention, the exterior surface of the cylindrical piston wall includes at least one pin element extending laterally therefrom.

According to a further teaching of the present invention, the rotatable pump cylinder configuration includes a substantially cylindrical cylinder wall that defines a pump cylinder region in which the pump piston is deployed, the substantially cylindrical cylinder wall configured with a wave shaped groove into which the pin element extends.

According to a further teaching of the present invention, the rotatable pump cylinder configuration includes at least two components that when assembled define between them the wave shaped groove.

According to a further teaching of the present invention, the two components, when assembled, define between them the wave shaped groove and are configured such that a first component includes a top wall and a side wall of the wave shaped groove and a second component includes a bottom wall of the wave shaped groove.

According to a further teaching of the present invention, the exterior surface of the cylindrical piston wall includes a resilient lip that extends around a periphery of the cylindrical wall and provides an air-tight seal between the rotatable pump cylinder configuration and the pump piston element during an expansion stroke, and when under pressure of a compression stroke, allows air to pass between the rotatable pump cylinder configuration and the pump piston element.

According to a further teaching of the present invention, the rotation of the rotatable pump cylinder configuration generates linear motion of the rotatable pump cylinder configuration so as to create a state of at least partial vacuum within the container.

According to a further teaching of the present invention, the rotation of the rotatable pump cylinder configuration generates linear motion of the rotatable pump cylinder configuration so as to create a pressurized state within the container.

According to a further teaching of the present invention, the at least one valve component is configured as at least two valve components, each of the at least two valve components having a slit wherein upon deployment, the slits are aligned so as to intersect one another at an angle.

According to a further teaching of the present invention, the slits are aligned so as to intersect one another at right angles.

### BRIEF DESCRIPTION OF THE DRAWINGS

The invention is herein described, by way of example only, with reference to the accompanying drawings, wherein:
FIG. 1 is a schematic side sectional view illustrating the main components of a pump lid constructed and operational according to the teachings of the present invention, deployed on a container;
FIG. 2 is a cross sectional elevation of a first preferred embodiment of a pump lid constructed and operational according to the teachings of the present invention, showing the cylinder at the end of a compression stroke;
FIG. 3 is a cross sectional elevation of the embodiment of FIG. 2, showing the cylinder at the end of an expansion stroke;
FIG. 4 is a partial cut-away view of the embodiment of FIG. 2, showing the association of the wave-shaped groove and the pump actuation pin;
FIG. 5 is an isometric cross section of the pump piston of FIG. 3;
FIG. 6; is an isometric cross sectional side view of the rotatable pump cylinder of the pump lid embodiment of FIG. 2
FIG. 7 is a schematic bottom view of a valve sticker constructed and operational according to the teachings of the present invention;
FIG. 8 is a schematic cross sectional elevation of a pump lid constructed and operational according to the teachings of the present invention, showing an alternative valve configuration at the end of a compression stroke;
FIG. 9 is a schematic cross sectional elevation of the pump lid of FIG. 8 at the end of an expansion stroke; and
FIG. 10 is a schematic illustration of an alternative child proof arrangement constructed and operational according to the teachings of the present invention.
FIG. 11 is a schematic cross-sectional view of an illustrative pump lid according to the teachings of the present invention, illustrating a pressure indication configuration;
FIG. 11A is a schematic top view of the piston element of the pump lid of FIG. 11;
FIG. 12 is a schematic cross-sectional view of an illustrative pump lid according to the teachings of the present invention, illustrating a filter arrangement;
FIG. 13 is a schematic cross-sectional view of an illustrative pump lid according to the teachings of the present invention, illustrating a pressurizing pump arrangement:
FIGS. 13A-13C are schematic top views of the components of the valve configuration of the pressurizing pump lid of FIG. 13;
FIG. 13D is a schematic cross-sectional view of the illustrative pump lid of FIG. 13, illustrating the pump cylinder is a raised position;
FIG. 14 is a schematic cross-sectional view of an illustrative pump lid according to the teachings of the present invention, illustrating deployment of the lid on a spray bottle in which the pressurized air is free to make contact with the liquid contents of the spray bottle; and
FIG. 15 is a schematic cross-sectional view of an illustrative pump lid according to the teachings of the present invention, illustrating deployment of the lid on a spray bottle in which the pressurized air is separated form the liquid contents of the spray bottle.

### DESCRIPTION OF THE PREFERRED EMBODIMENTS

The present invention is an improved pump lid for use on a container.

The principles and operation of an improved pump lid according to the present invention may be better understood with reference to the drawings and the accompanying description.

By way of introduction, as mentioned above, the present invention comes to improve the inventor's prior version of a pump lid as disclosed in U.S. Patent No. 6,973,945 and U.S. Patent Application No. 20005/0274734, both of which are incorporated by reference as if they were fully set forth herein. These improvements include a shorter profile, an increase in piston diameter, thereby increasing suction and the compression capacity of the pump and ease of manufacture.

The shortened profile is accomplished by configuring the container attachment arrangement in a hollow region of the interior of the piston. That is to say, the pump lid of the present invention is deployed on a container such that when the lid is attached to the container at least a portion of the piston circumscribes the part of the container. In the previous versions of the pump lid, the pump arrangement extends above the seat portion that is configured for attachment to the container. The increase in piston diameter is the result of having the piston circumscribe the container.

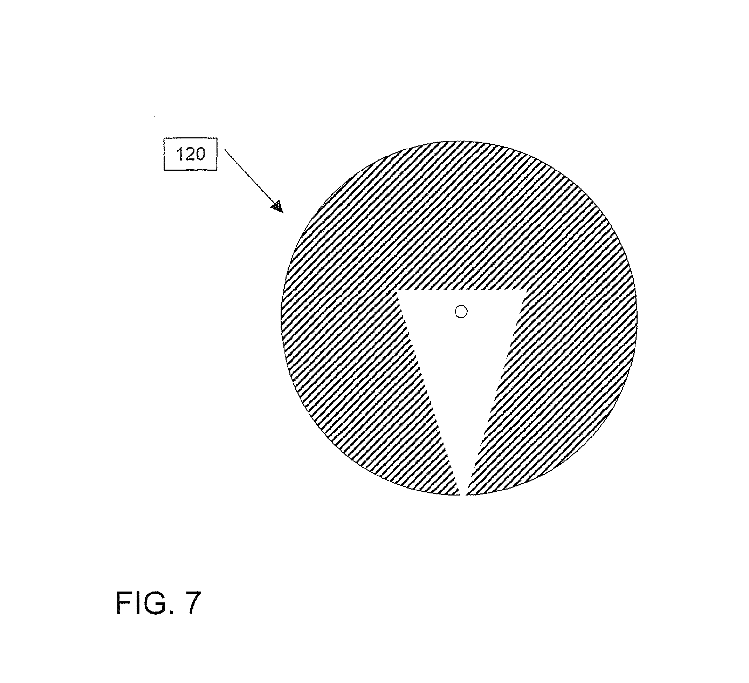

Manufacture of the pump lid of the present invention is simplified in several ways, including configuring the rotatable cylinder in two pieces such that the wave shaped groove is realized by the joining together of the two pieces, as will be discussed below in detail. Further, the valves may be configured with lip valves (also known as sticker valves), as illustrated in Figure 7, that are installed over valve openings.

It will be appreciated that similar to the previous versions of a pump lid, rotational movement of one component of the pump lid is translated into linear movement of another element of the pump lid. Further, the pump lid of the present invention may be configured to pump air out of the interior volume of the container, thereby creating of state of at least partial vacuum within the container. Alternatively, ambient air may be pumped into the container, thereby creating a pressurized state within the container.

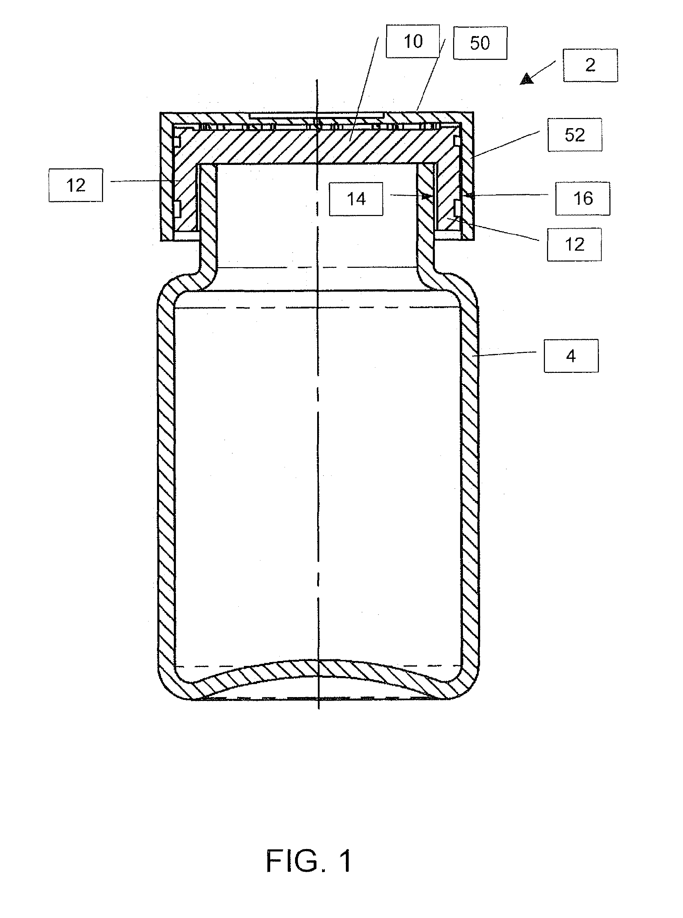

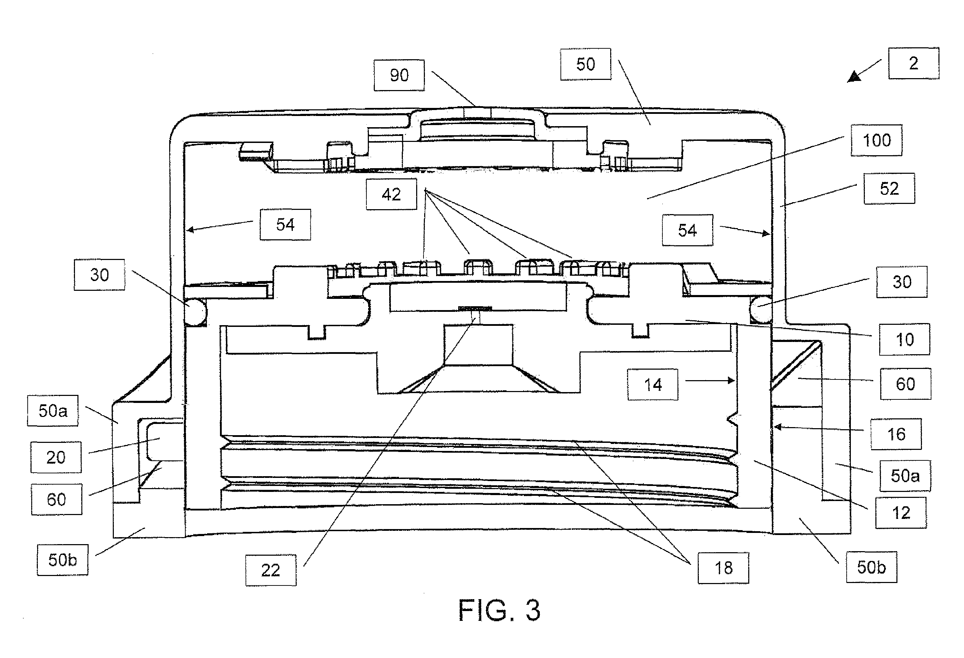

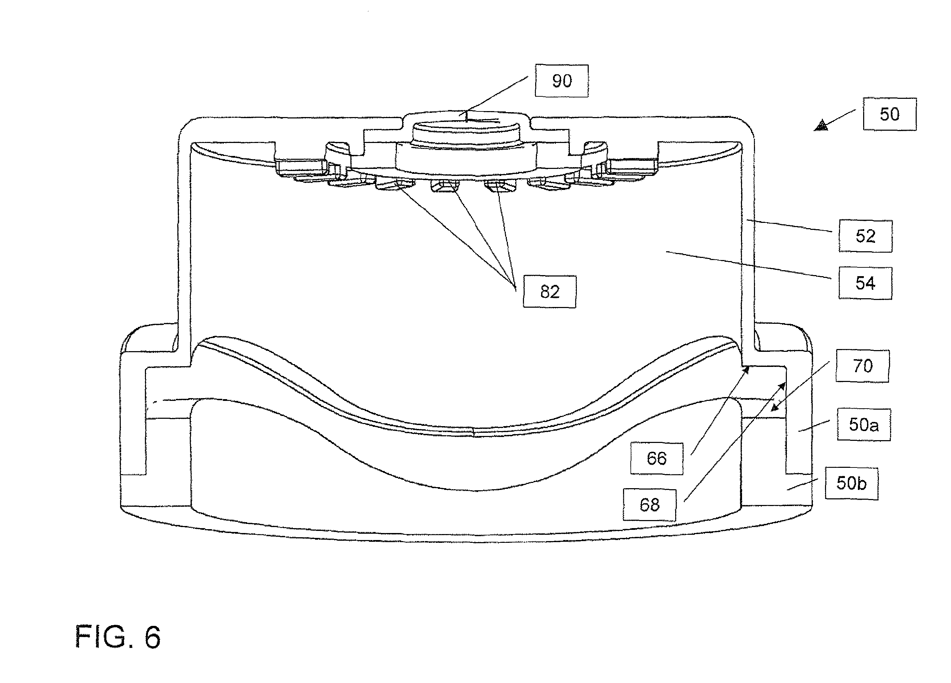

Referring now to the drawings, Figure 1 illustrates a pump lid 2 of the present invention deployed on a container 4, illustrated here as a bottle. The pump piston element 10 is configured with a substantially cylindrical wall 12 having an interior surface 14 and an exterior surface 16. At least a portion of the interior surface 14 is configured for the releasable attachment to the container 4 and at least a portion of the exterior surface **16** interacts with the rotatable pump cylinder **50.** Therefore, the pump piston element **10** is deployed on the container **4** such that at least a portion of piston wall **12** circumscribes a portion of the container. The exterior of the pump lid **2** is the rotatable pump cylinder configuration **50** that includes a substantially cylindrical cylinder wall **52** that defines a pump cylinder region **54** (best seen in Figures 3, 6 and 9) in which the pump piston is deployed. Therefore, when assembled, and the pump piston **10** is deployed within the pump cylinder **50** (best seen in Figure 3), the two components define between them a variable pump volume **100.** This configuration minimizes the height above the container **4** to which the pump lid **2** of the present invention extends.

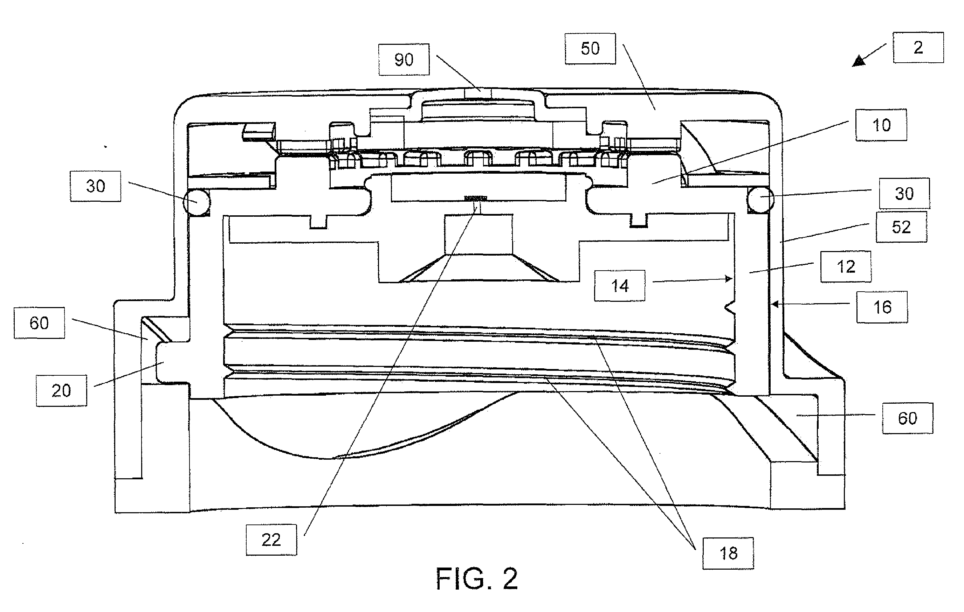

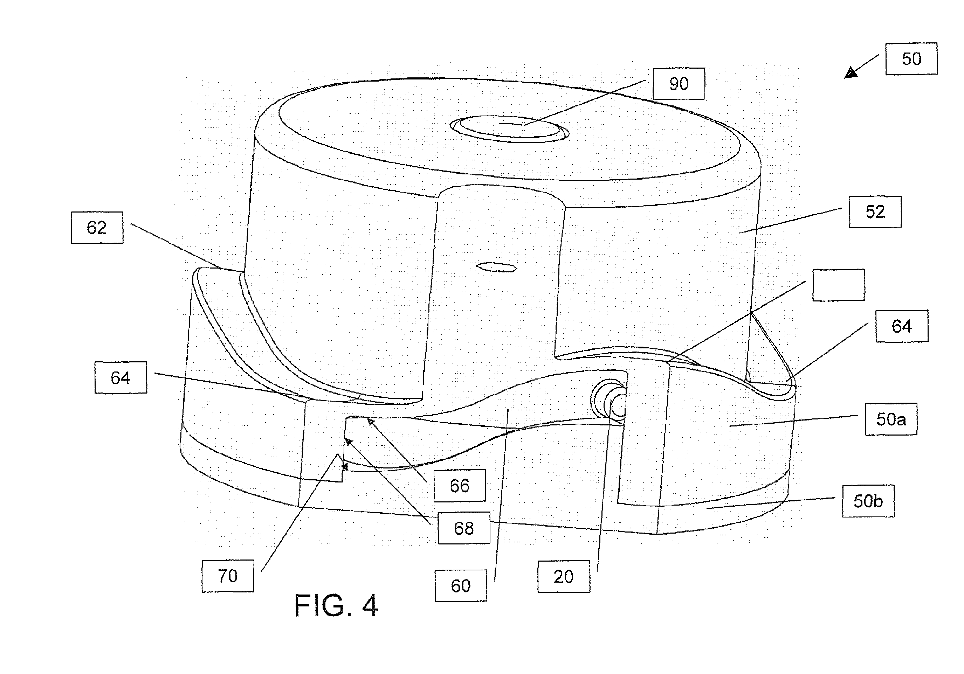

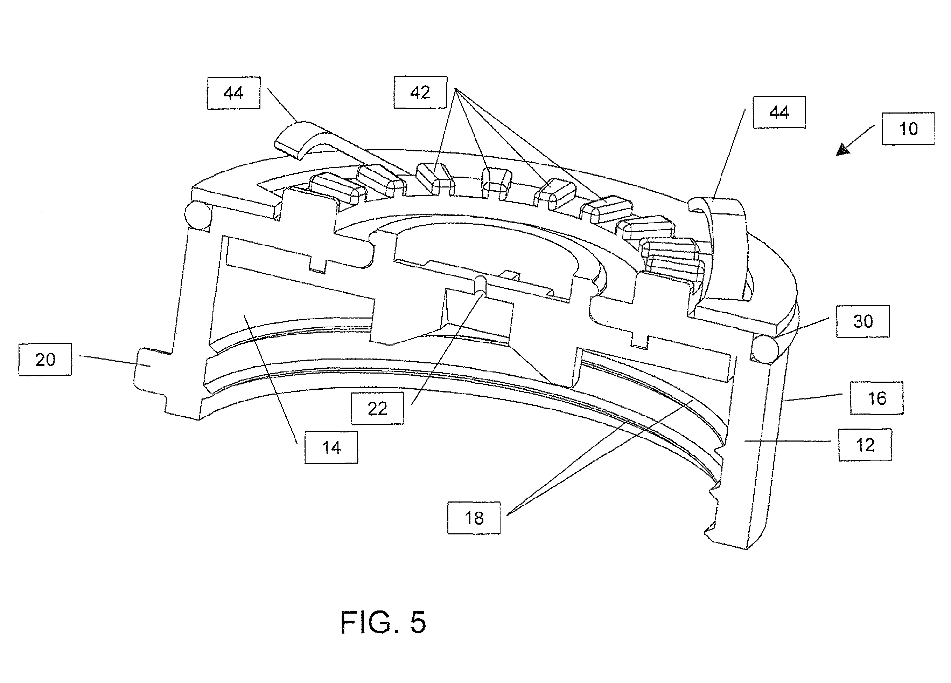

Figures 2-6 illustrate in greater detail a fully assembled pump lid **2** of the present invention. In this embodiment, releasable attachment of the pump piston element **10** to the container is effected by screw threads **18** configured on the interior surface **14** of the piston wall **12.** The screw threads **18** are configured to engage corresponding threads on the container, such that the piston is screwed onto the container so as to circumscribe at least a portion of the container.

The exterior surface **16** of the cylindrical wall **12** includes at least one pump actuation pin element **20** extending laterally therefrom. The interior surface **54** of the cylinder wall **52** is configured with a wave-shaped groove **60** that extends over an arc of 360° around the interior surface **54.**

The rotatable pump cylinder configuration **50** is deployed over the pump piston element **10** with pump actuation pin element **20** extending into wave-shaped groove **60.**

Relative linear displacement between the pump piston element **10** and the rotatable pump cylinder configuration **50,** so as to perform the pumping operation, is achieved by rotating the pump cylinder configuration **50** about the pump piston element **10.** The interaction of the wave-shaped groove **60** with the pump actuation pin element **20** translates the rotational movement of the rotatable pump cylinder configuration **50** into linear movement of the rotatable pump cylinder configuration **50.**

The embodiment illustrated in Figures 2-6 has three pump actuation pin elements **20** equally spaced about the exterior surface **16** of the cylindrical wall **12.** Wave-shaped groove **60** on the interior surface **54** of the cylinder wall **52** is configured with a corresponding three wave forms. That is, a wave crest **62** and trough **64** for each pump actuation pin elements **20.** It will be appreciated, however, that this is for illustrative purposes only and that varying the number of pump actuation pin elements **20** and the number of associated wave crests **62** and troughs **64** is within the scope of the present invention. It will be understood the number of pumping strokes (the combination of an expansion stroke and a compression stroke) per each rotation of the rotatable pump cylinder configuration **50** is equal to the number of waves forms configured in the wave shaped groove. Therefore, the embodiment of the present invention illustrated in Figures 2-6 will produce three linear pumping strokes per one rotation of the rotatable pump cylinder configuration **50.**

Preferably, the individual components of the pump lid **2** are produced from plastics by, for non-limiting example, injection molding. For ease of manufacture, the rotatable pump cylinder configuration **50** is fabricated from two separately molded sections, a cylinder top section **50a** and a cylinder bottom section **50b** that when assembled define between them the wave shaped groove **60.** As is clearly illustrated in Figures 2-4 and 6, cylinder top section **50a** includes the top wall **66** and the side wall **68** of said wave shaped groove **60** and the cylinder bottom section **50b** the bottom wall **70** of the wave shaped groove **60.**

In operation, as the rotatable pump cylinder configuration **50** is rotated it is also linearly displaced. As the rotatable pump cylinder configuration **50** is displaced away from the pump piston element **10** the variable pump volume **100** increases and air is drawn out of the container through a one-way valve arrangement **22** configured in the pump piston element **10.** As the rotatable pump cylinder configuration **50** is displaced toward the pump piston element **10** the variable pump volume **100** decreases and air is forced out of the variable pump volume **100** through one-way valve arrangement **90** configured in the top of rotatable pump cylinder configuration **50.** It will be appreciated that O-ring **30** provides an air-tight seal between the rotatable pump cylinder configuration **50** and the pump piston element **10.**

It will be understood that substantially any suitable one-way valve arrangement known in the art may be used. By non-limiting example, one-way valve arrangement **90** may be configured with a lip valve (also known as a sticker valve) **120** covering the opening (see Figure 7).

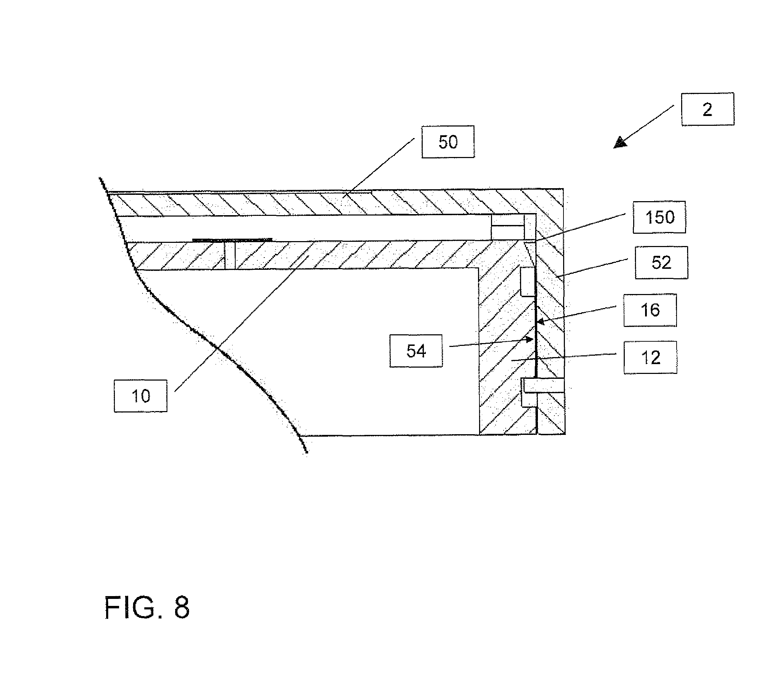

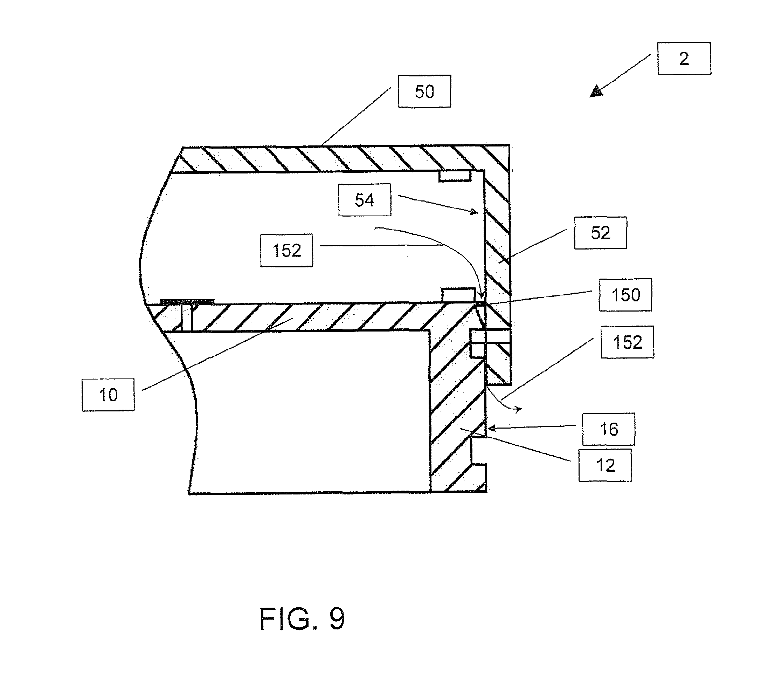

Alternatively, as illustrated in Figures 8 and 9, both one-way valve arrangement **90** and O-ring **30** may be replaced by configuring the exterior surface **16** of the cylindrical wall **12** so as to include a resilient lip **150** that extends around the periphery of the cylindrical wall **12** and provides an air-tight seal between the rotatable pump cylinder configuration **50** and the pump piston element **10** during an expansion stroke, yet when under the pressure of a compression stroke, allows air to pass and escape between the walls of the rotatable pump cylinder configuration **50** and the pump piston element **10** as illustrated by the arrows **152**.

Also illustrated are two childproof arrangements. The child-proof arrangement of Figures 2, 3, 5 and 6 includes circularly spaced apart teeth **42** configured in the top surface of the pump piston element **10.** Corresponding teeth **82** are configured on the interior surface of the top wall of the rotatable pump cylinder configuration **50.** During normal pumping operation, spring elements **44** configured in the top surface of the pump piston element **10** prevent teeth **42** and teeth **82** from meshing. In order to remove pump lid **2** from container **4** the rotatable pump cylinder configuration **50** is pressed toward the pump piston element **10** so as to mesh teeth **42** and teeth **82** at which time rotation of pump cylinder configuration **50** will also rotate the pump piston element **10,** thereby unscrewing it from the container **2.** It will be understood that wave-shaped groove **60** is configured such that the distance between the top wall **62** and bottom wall **66** accommodates such displacement of the pump cylinder configuration **50.**

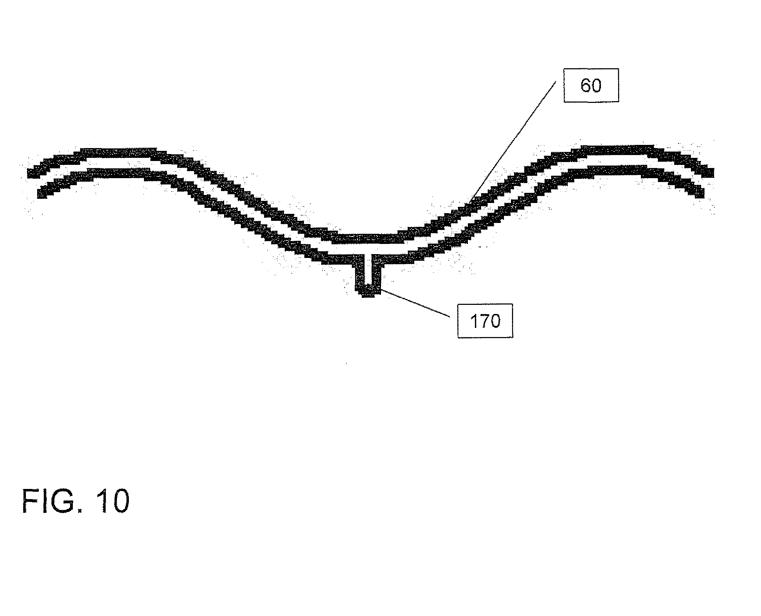

An alternative child-proof arrangement is illustrated in Figure10 As seen here, each trough of the wave-shaped groove **60** is configured with a slot **170** into which pump actuation pin elements **20** are pressed. Once the pump actuation pin elements **20** are in the slots **170** rotation of pump cylinder configuration **50** will also rotate the pump piston element **10,** thereby unscrewing it from the container **2.**

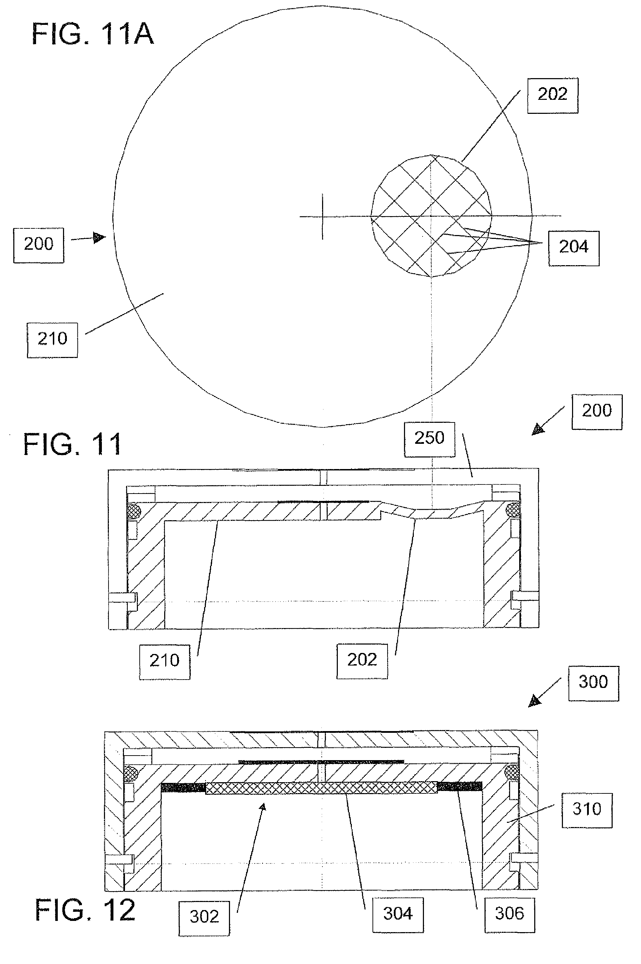

Figures 11 and 11A illustrate a further feature of the present invention that may be used with benefit on substantially any embodiment of a pump lid of the present invention. Illustrated here, is a flexible pressure indicator region **202** configured in the piston element **210** of pump lid **200.** As shown here, it will be understood that rotatable pump cylinder configuration **250,** or at least a portion thereof, is fabricated from a transparent material such that flexible pressure indicator region **202** is visible through rotatable pump cylinder configuration **250.**

In operation, flexible pressure indicator region **202** is configured to flex in response to the pressure state within the container on which the pump lid is deployed. When a vacuum state exists within the container, the flexible pressure indicator region **202** is drawn inward, as illustrated here, and the pattern of the grid-lines **204** is visibly deformed. Similarly, when a pressurized state exists within the container, the flexible pressure indicator region **202** is pushed outwardly and, here again, the pattern of the grid-lines **204** is visibly deformed.

Figure 12 illustrates yet another feature of the present invention that may be used with benefit on substantially any embodiment of a pump lid of the present invention. As illustrated here, pump lid **300** includes a pump piston element having a filter element **302.** Filter element **302** is configured with a filter region **304** that allows the passage of air while restricting the passage of the powered contents of the container to which pump lid **300** is attached. Filter region is held in place by the attachment ring **306,** which may rigid or semi-flexible and may be integrally formed with filter element **304** or may be a separate component. Attachment ring **306** may be fabricated from silicone, Teflon®, natural or synthetic rubbers, and various types of suitable plastics, as non-limiting examples.

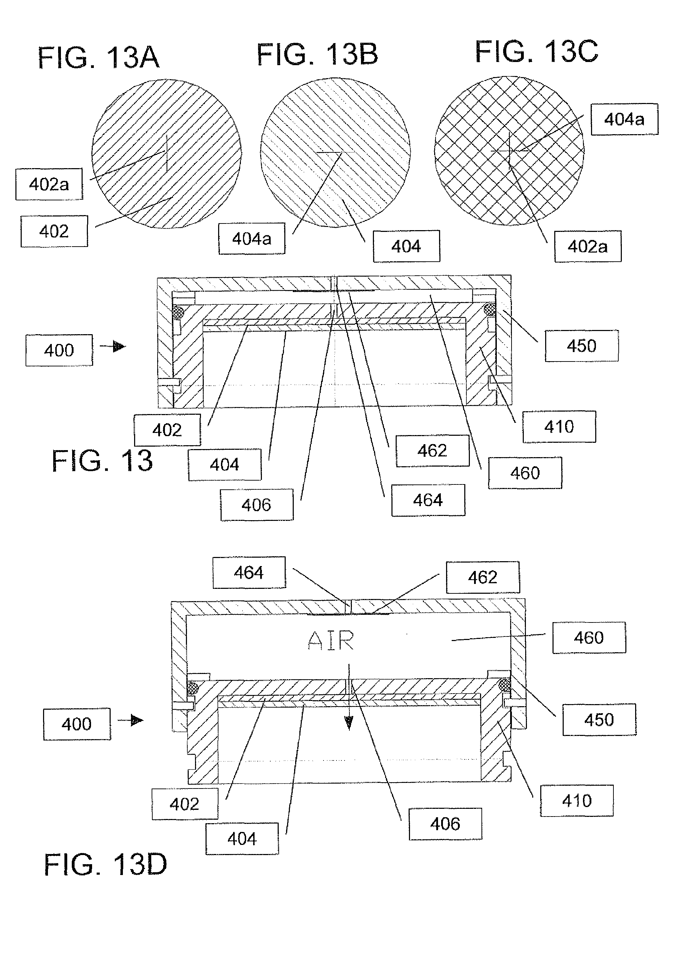

Figures 13-13D illustrate a unique one-way valve arrangement (Figures 13A-13C) deployed in a pump lid **400** according to the present invention. Here the pump lid **400** is configured to pressurize the interior volume of the container to which it is attached.

As in other embodiments of the pump lid of the present invention, when rotatable pump cylinder configuration **450** is rotated about the pump piston element **410** rotatable pump cylinder configuration **450** is longitudinally displaced outwardly, as seen in Figure 13D, and air is drawn through inlet opening **462** past one-way valve **464** and into the interior volume **460** of rotatable pump cylinder configuration **450.**

Upon further rotation of rotatable pump cylinder configuration **450** about the pump piston element **410** rotatable pump cylinder configuration **450** is longitudinally displaced inwardly, as seen in Figure 13A, and air is pushed through outlet opening **406** past one-way valve arrangement **402/404** and into the interior volume of the container (not shown).

As seen in Figures 13A-13C, one-way valve arrangement **402/404** includes two valve components. Valve component **402** is configured with a through slit **402a** disposed along a substantially vertical center line of valve component **402.** Similarly, valve component **404** is configured with a through slit **404a** disposed along a substantially horizontal center line of valve component **404.** It will be understood that the linear motion of the pump lid **400** forces air through slits **404a** and **404b.**

As illustrated in Figure 13C, when the two valve components **402** and **404** are deployed within pump piston element **410** the two slits **402a** and **404a** are aligned at right angles (90°) one to another. It will be appreciated that although the preferred embodiment of the one-way valve arrangement **402/404** illustrated herein is configured as circular valve components having slits that intersect at a center point of the two overlapping circles, these are not necessities of the one-way valve arrangement **402/404** of the present invention, nor is the order of deployment. It will be readily understood that the exterior shape of the valve components may be of substantially any suitable shape nor need each of the valve components be of the same shape. Further, the slits need not be configured so as to intersect at right angles at the center point of the two overlapping valve components. Therefore, embodiments having slits aligned at other than right angles and/or intersecting at a point other than a center point are within the scope of the present invention. It should be noted that experimentation has show the use of only one valve component, either **402** or **404,** to be effective for maintaining a useful pressure differential within the interior volume for some applications.

It will be appreciated that one-way valve arrangement **402/404** may be constructed as an integrally formed single unit. Alternatively, as illustrated here, as two separate valve components, **402** and **404,** which may be held in place by a retainer element, for a total of three pieces.

Further, valve components **402** and **404** may be fabricated from substantially any suitable material such as, but not limited to, natural rubber, synthetic rubber, silicon, soft resilient plastics and the like.

It will be appreciated that valve components **402** and **404** may be fabricated from substantially any suitable flexible material such as, but not limited to, silicone, Teflon ®, natural or synthetic rubbers, and various types of suitable plastics.

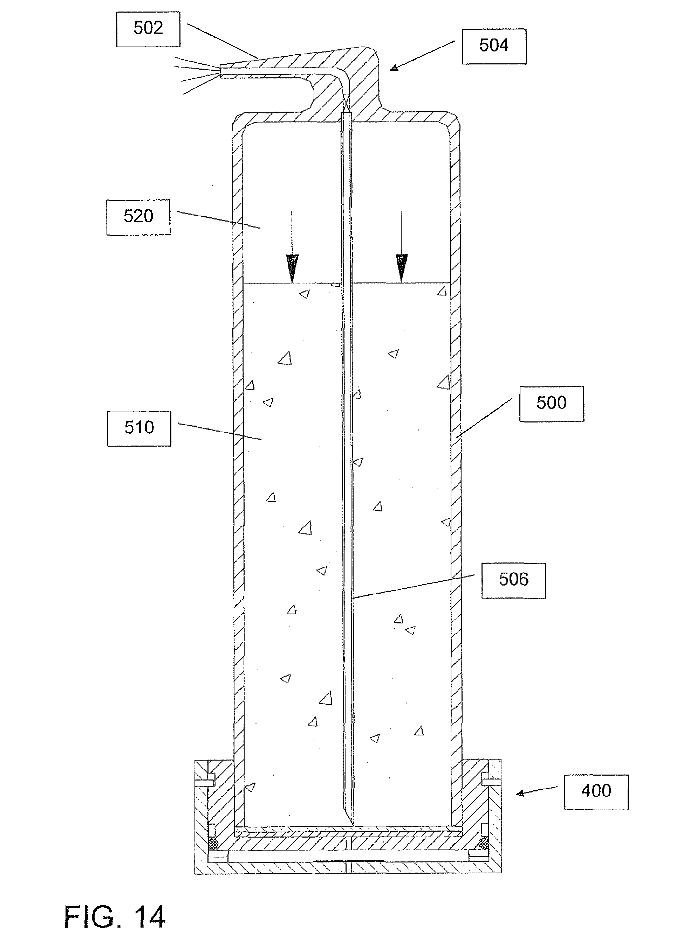

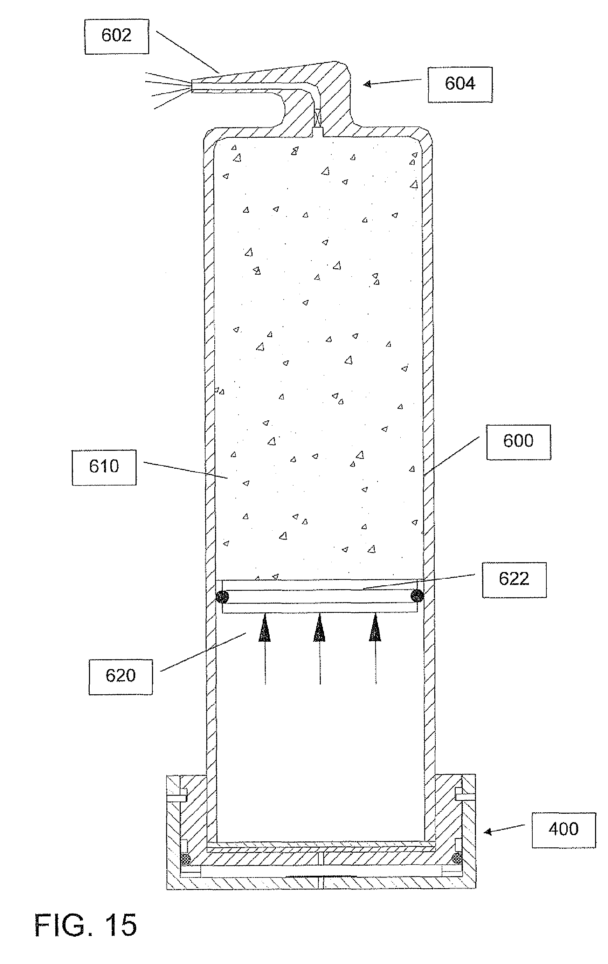

Figures 14 and 15 illustrate the deployment of pump lid **400** on containers containing fluids for pressurized discharge from the container.

The container **500** of Figure 14 is configured for fluids that are not sensitive to direct contact with air, therefore, air is pumped using pump lid **400** directly into the interior volume of container **500.** Container **500** is configured with a release control arrangement **504** as is known in the art for the release of fluid through outlet nozzle **502.**

In operation, as pump lid **400** is actuated, air pressure builds up in region **520** within the interior volume of container **500** and consequently pressurizes fluid **510.** When the release control arrangement **504** is activated, fluid **510** enters outlet tube **506** and is released through outlet nozzle **502.** Such release of fluid **510** may be as, but not limited to, a spray, continuous flow, mist or foam.

The container **600** of Figure 15 is configured for fluids that are sensitive to direct contact with air, therefore, air is pumped using pump lid **400** directly into region **620** in the interior volume of container **600.** Region **620** is separated from direct contact with fluid **610** by barrier **622** that is displaceable within container **600** by the application of air pressure within region **620.** It will be understood that barrier **622** may be configured as substantially any suitable separating element and may be of substantially and suitable shape. The illustrations provided here are by example only and are not intended to limit the scope of the present invention. Container **600** is also configured with a release control arrangement **604** as is known in the art for the release of fluid through outlet nozzle **602.**

In operation, as pump lid **400** is actuated, air pressure builds up in region **620** within the interior volume of container **600** and consequently applies pressure to barrier **622** so as to pressurize fluid **610.** When the release control arrangement **604** is activated, fluid **610** is released through outlet nozzle **602.** Such release of fluid **610** may be as, but not limited to, a spray, continuous flow, mist or foam.

It should be noted that release of the pressurized fluid in both containers **500** and **600** need not be immediately after pressurization and that the fluid may remain in the container in a pressurized state for an extended period of time.

It will be appreciated that the above descriptions are intended only to serve as examples and that many other embodiments are possible within the spirit and the scope of the present invention.

## Claims

1. A pump lid assembly for use with a container (4), the lid assembly comprising;
(a) a rotatable pump cylinder configuration (50); and
(b) a pump piston (10) mechanically associated with said rotatable pump cylinder configuration (50) such that at least a portion of said piston (10) is deployed within said pump cylinder (50), thereby defining between them a variable pump volume, said pump piston (10) configured with a substantially cylindrical piston wall (12) having an interior surface (14) and an exterior surface (16) such that at least a portion of said exterior surface (14) interacts with said rotatable pump cylinder configuration (50),
**characterized in that**
at least a portion of said interior surface (14) is configured for releasable attachment to the container (4), and wherein said association is such that rotation of said rotatable pump cylinder configuration generates linear motion of said rotatable pump cylinder configuration.

2. The pump lid of claim 1, wherein said exterior surface of said cylindrical piston wall (12) includes at least one pin element (20) extending laterally therefrom and said rotatable pump cylinder configuration includes a substantially cylindrical cylinder wall that defines a pump cylinder region in which said pump piston is deployed, said substantially cylindrical cylinder wall configured with a wave shaped groove (60) into which said pin element extends.

3. The pump lid of claim 2, wherein said rotatable pump cylinder configuration includes at least two components (50a, 50b) that when assembled define between them said wave shaped groove (60).

4. The pump lid of claim 3, wherein said two components, when assembled, define between them said wave shaped groove (60) and are configured such that a first component includes a top wall (66) and a side wall (68) of said wave shaped groove and a second component includes a bottom wall (70) of said wave shaped groove (60),

5. The pump lid of claim 2, wherein said exterior surface of said cylindrical piston wall (12) includes a resilient lip (150) that extends around a periphery of said cylindrical wall and provides an air-tight seal between said rotatable pump cylinder configuration and said pump piston element during an expansion stroke, and when under pressure of a compression stroke, allows air to pass between said rotatable pump cylinder configuration and said pump piston element.

6. The pump lid of claim 1, further comprising;
(a) a container body (500);
(b) a release control arrangement (504); and
(c) an outlet nozzle (502),

7. The container of claim 6, further including a barrier (622) deployed within the interior volume of the container so as to separate pressurized air from the fluid contained in the container.

8. The pump lid of claim 1, further comprising:
(a) a one-way valve arrangement comprising at least one valve component (402/404) having a through slit (404a, 404b) through which air is forced by said linear motion.

9. The pump lid of claim 8, wherein said exterior surface of said cylindrical piston wall (12) includes at least one pin element (20) extending laterally therefrom and said rotatable pump cylinder configuration includes a substantially cylindrical cylinder wall that defines a pump cylinder region in which said pump piston (10) is deployed, said substantially cylindrical cylinder wall configured with a wave shaped groove (60) into which said pin element (20) extends.

10. The pump lid of claim 9, wherein said rotatable pump cylinder configuration includes at least two components that when assembled define between them said wave shaped groove (60).

11. The pump lid of claim 8, wherein said two components, when assembled, define between them said wave shaped groove (60) and are configured such that a first component includes a top wall (66) and a side wall (68) of said wave shaped groove and a second component includes a bottom wall (70) of said wave shaped groove.

12. The pump lid of claim 8, wherein said exterior surface of said cylindrical piston wall (12) includes a resilient lip (150) that extends around a periphery of said cylindrical wall and provides an air-tight seal between said rotatable pump cylinder configuration (50) and said pump piston element (10) during an expansion stroke, and when under pressure of a compression stroke, allows air to pass between said rotatable pump cylinder configuration and said pump piston element.

13. The pump lid of claim 8, wherein said rotation of said rotatable pump cylinder configuration (50) generates linear motion of said rotatable pump cylinder configuration so as to create one of a state of at least partial vacuum and a pressurized state within the container (4).

14. The pump lid of claim 8, wherein said at least one valve component is configured as at least two valve components (402/404), each of said at least two valve components having a slit (404a, 404b) wherein upon deployment, said slits are aligned so as to intersect one another at an angle.

15. A method for discharging pressurized fluid from a container, the method comprising:
(a) providing a container body (4);
(b) providing a pump lid (2) deployed on said container body for pressurizing an interior volume of the container, said pump lid having:
(i) a rotatable pump cylinder configuration (50); and
(ii) a pump piston (10) mechanically associated with said rotatable pump cylinder configuration such that at least a portion of said piston is deployed within said pump cylinder, thereby defining between them a variable pump volume, said pump piston configured with a substantially cylindrical piston wall (12) having an interior surface (14) and an exterior surface (16) such that at least a portion of said interior surface is configured for releasable attachment to the container (4) and at least a portion of said exterior surface interacts with said rotatable pump cylinder configuration;
wherein said association is such that rotation of said rotatable pump cylinder configuration (50) generates linear motion of said rotatable pump cylinder configuration
(c) actuating said pump lid so as to pressurize an interior volume of the container; and
(d) activating a release control arrangement so as to discharge the fluid through an outlet nozzle.

## Patentansprüche

1. Pumpendeckelbaugruppe zur Verwendung mit einem Behälter (4), wobei die Deckelbaugruppe Folgendes umfasst;
(a) eine drehbare Pumpenzylinderkonfiguration (50); und
(b) einen Pumpenkolben (10), der mit der drehbaren Pumpenzylinderkonfiguration (50) derart mechanisch verknüpft ist, dass mindestens ein Teil des Kolbens (10) innerhalb des Pumpenzylinders (50) eingesetzt ist, wodurch sie dazwischen ein variables Pumpvolumen definieren, wobei der Pumpenkolben (10) mit einer im Wesentlichen zylindrischen Kolbenwand (12) konfiguriert ist, die eine Innenfläche (14) und eine Außenfläche (16) aufweist, so dass mindestens ein Teil der Außenfläche (14) mit der drehbaren Pumpenzylinderkonfiguration (50) interagiert,
**dadurch gekennzeichnet, dass** mindestens ein Teil der Innenfläche (14) zur lösbaren Anbringung an dem Behälter (4) konfiguriert ist, und wobei die Verknüpfung derart ist, dass die Drehung der drehbaren Pumpenzylinderkonfiguration eine lineare Bewegung der drehbaren Pumpenzylinderkonfiguration erzeugt.

2. Pumpendeckel nach Anspruch 1, wobei die Außenfläche der zylindrischen Kolbenwand (12) mindestens ein Stiftelement (20) umfasst, das sich von dieser aus seitlich erstreckt, und die drehbare Pumpenzylinderkonfiguration eine im Wesentlichen zylindrische Zylinderwand umfasst, die eine Pumpenzylinderregion definiert, in welcher der Pumpenkolben eingesetzt ist, wobei die im Wesentlichen zylindrische Zylinderwand mit einer wellenförmigen Nut (60) konfiguriert ist, in die sich das Stiftelement erstreckt.

3. Pumpendeckel nach Anspruch 2, wobei die drehbare Pumpenzylinderkonfiguration mindestens zwei Bauteile (50a, 50b) umfasst, die, wenn sie zusammengebaut sind, dazwischen die wellenförmige Nut (60) definieren.

4. Pumpendeckel nach Anspruch 3, wobei die beiden Bauteile, wenn sie zusammengebaut sind, dazwischen die wellenförmige Nut (60) definieren und derart konfiguriert sind, dass ein erstes Bauteil eine obere Wand (66) und eine Seitenwand (68) der wellenförmigen Nut umfasst, und ein zweites Bauteil eine untere Wand (70) der wellenförmigen Nut (60) umfasst.

5. Pumpendeckel nach Anspruch 2, wobei die Außenfläche der zylindrischen Kolbenwand (12) eine federelastische Lippe (150) umfasst, die sich um eine Peripherie der zylindrischen Wand herum erstreckt und eine luftdichte Abdichtung zwischen der drehbaren Pumpenzylinderkonfiguration und dem Pumpenkolbenelement während eines Expansionshubs bereitstellt und unter dem Druck eines Kompressionshubs stehend Luft zwischen der drehbaren Pumpenzylinderkonfiguration und dem Pumpenkolbenelement durchlässt.

6. Pumpendeckel nach Anspruch 1, ferner umfassend:
(a) einen Behälterkörper (500);
(b) eine Freigabesteueranordnung (504); und
(c) eine Auslassdüse (502).

7. Behälter nach Anspruch 6, ferner umfassend eine Sperre (622), die innerhalb des Innenvolumens des Behälters eingesetzt ist, um die Druckluft von dem Fluid, das in dem Behälter enthalten ist, zu trennen.

8. Pumpendeckel nach Anspruch 1, ferner umfassend:
(a). eine Einweg-Ventilanordnung, die mindestens ein Ventilbauteil (402/404) umfasst, das einen Durchgangsschlitz (404a, 404b) aufweist, durch den durch die lineare Bewegung Luft gepresst wird.

9. Pumpendeckel nach Anspruch 8, wobei die Außenfläche der zylindrischen Kolbenwand (12) mindestens ein Stiftelement (20) umfasst, das sich von dieser aus seitlich erstreckt, und die drehbare Pumpenzylinderkonfiguration eine im Wesentlichen zylindrische Zylinderwand umfasst, die eine Pumpenzylinderregion definiert, in welcher der Pumpenkolben (10) eingesetzt ist, wobei die im Wesentlichen zylindrische Zylinderwand mit einer wellenförmigen Nut (60) konfiguriert ist, in die sich das Stiftelement (20) erstreckt.

10. Pumpendeckel nach Anspruch 9, wobei die drehbare Pumpenzylinderkonfiguration mindestens zwei Bauteile umfasst, die, wenn sie zusammengebaut sind, dazwischen die wellenförmige Nut (60) definieren.

11. Pumpendeckel nach Anspruch 8, wobei die beiden Bauteile, wenn sie zusammengebaut sind, dazwischen die wellenförmige Nut (60) definieren und derart konfiguriert sind, dass ein erstes Bauteil eine obere Wand (66) und eine Seitenwand (68) der wellenförmigen Nut umfasst, und ein zweites Bauteil eine untere Wand (70) der wellenförmigen Nut umfasst.

12. Pumpendeckel nach Anspruch 8, wobei die Außenfläche der zylindrischen Kolbenwand (12) eine federelastische Lippe (150) umfasst, die sich um eine Peripherie der zylindrischen Wand herum erstreckt und eine luftdichte Abdichtung zwischen der drehbaren Pumpenzylinderkonfiguration (50) und dem Pumpenkolbenelement (10) während eines Expansionshubs bereitstellt und unter dem Druck eines Kompressionshubs stehend Luft zwischen der drehbaren Pumpenzylinderkonfiguration und dem Pumpenkolbenelement durchlässt.

13. Pumpendeckel nach Anspruch 8, wobei die Drehung der drehbaren Pumpenzylinderkonfiguration (50) eine lineare Bewegung der drehbaren Pumpenzylinderkonfiguration erzeugt, um einen von einem Zustand mindestens eines Teilvakuums und einem Druckzustand im Innern des Behälters (4) zu schaffen.

14. Pumpendeckel nach Anspruch 8, wobei das mindestens eine Ventilbauteil als mindestens zwei Ventilbauteile (402/404) konfiguriert ist, wobei jedes der mindestens zwei Ventilbauteile einen Schlitz (404a, 404b) aufweist, wobei beim Einsetzen die Schlitze derart ausgerichtet sind, dass sie sich in einem Winkel schneiden.

15. Verfahren zum Ablassen eines unter Druck stehenden Flüids aus einem Behälter, wobei das Verfahren folgende Schritte umfasst:
(a) Bereitstellen eines Behälterkörpers (4);
(b) Bereitstellen eines Pumpendeckels (2), der auf dem Behälterkörper eingesetzt ist, um ein Innenvolumen des Behälters unter Druck zu setzen, wobei der Pumpendeckel Folgendes aufweist:
(i) eine drehbare Pumpenzylinderkonfiguration (50); und
(ii) einen Pumpenkolben (10), der mit der drehbaren Pumpenzylinderkonfiguration derart mechanisch verknüpft ist, dass mindestens ein Teil des Kolbens im Innern des Pumpenzylinders eingesetzt ist, wodurch sie dazwischen ein variables Pumpvolumen definieren, wobei der Pumpenkolben mit einer im Wesentlichen zylindrischen Kolbenwand (12) konfiguriert ist, die eine Innenfläche (14) und eine Außenfläche (16) aufweist, so dass mindestens ein Teil der Innenfläche zur lösbaren Anbringung an dem Behälter (4) konfiguriert ist und mindestens ein Teil der Außenfläche mit der drehbaren Pumpenzylinderkonfiguration interagiert;
wobei die Verknüpfung derart ist, dass die Drehung der drehbaren Pumpenzylinderkonfiguration (50) eine lineare Bewegung der drehbaren Pumpenzylinderkonfiguration erzeugt,
(c) Betätigen des Pumpendeckels, um ein Innenvolumen des Behälters unter Druck zu setzen; und
(d) Aktivieren einer Freigabesteueranordnung, um das Fluid durch eine Auslassdüse abzulassen.

## Revendications

1. Ensemble couvercle à pompe destiné à être utilisé avec un récipient (4), l'ensemble couvercle comprenant :
(a) une configuration de cylindre de pompe rotative (50) ; et
(b) un piston de pompe (10) associé mécaniquement à ladite configuration de cylindre de pompe rotative (50) de telle sorte qu'au moins une partie dudit piston (10) est déployée à l'intérieur dudit cylindre de pompe (50), définissant ainsi entre ceux-ci un volume de pompe variable, ledit piston de pompe (10) étant configuré avec une paroi de piston sensiblement cylindrique (12) ayant une surface intérieure (14) et une surface extérieure (16) de telle sorte qu'au moins une partie de ladite surface extérieure (14) interagit avec ladite configuration de cylindre de pompe rotative (50),
**caractérisé par le fait qu'**au moins une partie de ladite surface intérieure (14) est configurée pour une fixation libérable au récipient (4), et ladite association étant telle qu'une rotation de ladite configuration de cylindre de pompe rotative génère un mouvement linéaire de ladite configuration de cylindre de pompe rotative.

2. Couvercle à pompe selon la revendication 1, dans lequel ladite surface extérieure de ladite paroi de piston cylindrique (12) comprend au moins un élément téton (20) s'étendant latéralement à partir de celle-ci et ladite configuration de cylindre de pompe rotative comprend une paroi de cylindre sensiblement cylindrique qui définit une région de cylindre de pompe dans laquelle ledit piston de pompe est déployé, ladite paroi de cylindre sensiblement cylindrique étant configurée avec une gorge en forme d'onde (60) dans laquelle s'étend ledit élément téton.

3. Couvercle à pompe selon la revendication 2, dans lequel ladite configuration de cylindre de pompe rotative comprend au moins deux composants (50a, 50b) qui, lorsqu'ils sont assemblés, définissent entre ceux-ci ladite gorge en forme d'onde (60).

4. Couvercle à pompe selon la revendication 3, dans lequel lesdits deux composants, lorsqu'ils sont assemblés, définissent entre ceux-ci ladite gorge en forme d'onde (60) et sont configurés de telle sorte qu'un premier composant comprend une paroi supérieure (66) et une paroi latérale (68) de ladite gorge en forme d'onde et un second composant comprend une paroi inférieure (70) de ladite gorge en forme d'onde (60).

5. Couvercle à pompe selon la revendication 2, dans lequel ladite surface extérieure de ladite paroi de piston cylindrique (12) comprend une lèvre élastique (150) qui s'étend autour d'une périphérie de ladite paroi cylindrique et fournit un joint étanche à l'air entre ladite configuration de cylindre de pompe rotative et ledit élément de piston de pompe pendant une course de détente, et lorsqu'elle est sous la pression d'une course de compression, permet à de l'air de passer entre ladite configuration de cylindre de pompe rotative et ledit élément de piston de pompe.

6. Couvercle à pompe selon la revendication 1, comprenant en outre :
(a) un corps de récipient (500) ;
(b) un agencement de commande de libération (504) ; et
(c) une buse de sortie (502).

7. Récipient selon la revendication 6, comprenant en outre une cloison (622) déployée à l'intérieur du volume intérieur du récipient de façon à séparer l'air sous pression vis-à-vis du fluide contenu dans le récipient.

8. Couvercle à pompe selon la revendication 1, comprenant en outre :
(a) un agencement de clapet de non-retour comprenant au moins un composant de clapet (402/404) ayant une fente traversante (404a, 404b) à travers laquelle de l'air est forcé par ledit mouvement linéaire.

9. Couvercle à pompe selon la revendication 8, dans lequel ladite surface extérieure de ladite paroi de piston cylindrique (12) comprend au moins un élément téton (20) s'étendant latéralement à partir de celle-ci et ladite configuration de cylindre de pompe rotative comprend une paroi de cylindre sensiblement cylindrique qui définit une région de cylindre de pompe dans laquelle ledit piston de pompe (10) est déployé, ladite paroi de cylindre sensiblement cylindrique étant configurée avec une gorge en forme d'onde (60) dans laquelle s'étend ledit élément téton (20).

10. Couvercle à pompe selon la revendication 9, dans lequel ladite configuration de cylindre de pompe rotative comprend au moins deux composants qui, lorsqu'ils sont assemblés, définissent entre ceux-ci ladite gorge en forme d'onde (60).

11. Couvercle à pompe selon la revendication 8, dans lequel lesdits deux composants, lorsqu'ils sont assemblés, définissent entre ceux-ci ladite gorge en forme d'onde (60) et sont configurés de telle sorte qu'un premier composant comprend une paroi supérieure (66) et une paroi latérale (68) de ladite gorge en forme d'onde et un second composant comprend une paroi inférieure (70) de ladite gorge en forme d'onde.

12. Couvercle à pompe selon la revendication 8, dans lequel ladite surface extérieure de ladite paroi de piston cylindrique (12) comprend une lèvre élastique (150) qui s'étend autour d'une périphérie de ladite paroi cylindrique et fournit un joint étanche à l'air entre ladite configuration de cylindre de pompe rotative (50) et ledit élément de piston de pompe (10) pendant une course de détente, et lorsqu'elle est sous la pression d'une course de compression, permet à de l'air de passer entre ladite configuration de cylindre de pompe rotative et ledit élément de piston de pompe.

13. Couvercle à pompe selon la revendication 8, dans lequel ladite rotation de ladite configuration de cylindre de pompe rotative (50) génère un mouvement linéaire de ladite configuration de cylindre de pompe rotative de façon à créer à l'intérieur du récipient (4) l'un d'un état de vide au moins partiel et d'un état sous pression.

14. Couvercle à pompe selon la revendication 8, dans lequel ledit au moins un composant de clapet est configuré en au moins deux composants de clapet (402/404), chacun desdits au moins deux composants de clapet ayant une fente (404a, 404b), lors du déploiement lesdites fentes étant alignées de façon à se croiser l'une l'autre en formant un angle.

15. Procédé pour décharger du fluide sous pression à partir d'un récipient, le procédé comprenant :
(a) disposer un corps de récipient (4) ;
(b) disposer un couvercle à pompe (2) déployé sur ledit corps de récipient pour la mise sous pression d'un volume intérieur du récipient, ledit couvercle à pompe ayant :
(i) une configuration de cylindre de pompe rotative (50) ; et
(ii) un piston de pompe (10) associé mécaniquement à ladite configuration de cylindre de pompe rotative de telle sorte qu'au moins une partie dudit piston est déployée à l'intérieur dudit cylindre de pompe, définissant ainsi entre ceux-ci un volume de pompe variable, ledit piston de pompe étant configuré avec une paroi de piston sensiblement cylindrique (12) ayant une surface intérieure (14) et une surface extérieure (16) de telle sorte qu'au moins une partie de ladite surface intérieure est configurée pour une fixation libérable au récipient (4) et au moins une partie de ladite surface extérieure interagit avec ladite configuration de cylindre de pompe rotative ;
ladite association étant telle qu'une rotation de ladite configuration de cylindre de pompe rotative (50) génère un mouvement linéaire de ladite configuration de cylindre de pompe rotative ;
(c) actionner ledit couvercle à pompe de façon à mettre sous pression un volume intérieur du récipient ; et
(d) activer un agencement de commande de libération de façon à décharger le fluide à travers une buse de sortie.
